# FASCICULE DE BREVET EUROPEEN

(11) **EP 1 736 366 B1**
(45) Date de publication et mention de la délivrance du brevet: **05.03.2008**
(21) Numéro de dépôt: 06300267.9
(22) Date de dépôt: 22.03.2006
(51) Int. Cl.: B60R 13/02

(54) **Agencement pour le montage d'un panneau d'habillage le long d'une tôle de caisse de véhicule automobile et pièce de montage pour un tel agencement**
Anordnung zur Montage eines Innenausstattungspanels an einem Karosserieblech eines Automobils und zugehöriges Montageteil
Arrangement for mounting a trim panel to a body panel of a motor vehicle and corresponding mounting piece

(30) Priorité: 21.06.2005 FR 0551688
(43) Date de publication de la demande: 27.12.2006
(73) Titulaire: RENAULT S.A.S., 92100 Boulogne Billancourt (FR)
(72) Inventeur: Boyot, Lionel, 78370, Plaisir (FR); Brunel, Bernard, 92400, Courbevoie (FR)

(56) Documents cités:
- FR-A- 1 142 974
- US-A- 4 600 621
- PATENT ABSTRACTS OF JAPAN vol. 1999, no. 05, 31 mai 1999 (1999-05-31) -& JP 11 048875 A (IKEDA BUSSAN CO LTD), 23 février 1999 (1999-02-23)

## Description

L'invention concerne un agencement pour le montage d'un panneau d'habillage le long d'une tôle de caisse de véhicule automobile selon le préambule de la revendication 1.

Afin d'améliorer l'esthétique et le confort du véhicule, il est souhaitable d'habiller quasi entièrement les parties de tôle de la caisse de véhicule apparentes à l'intérieur de l'habitacle, et notamment le toit ou pavillon.

A cet effet, il est connu de rapporter sur la face inférieure du toit, un élément d'habillage communément appelé garniture de pavillon, réalisé par exemple, par moulage en matériau synthétique. Cet élément, en forme générale de panneau, doit être maintenu plaqué sur la tôle, ou parallèle à celle-ci, pendant toute la durée de vie du véhicule.

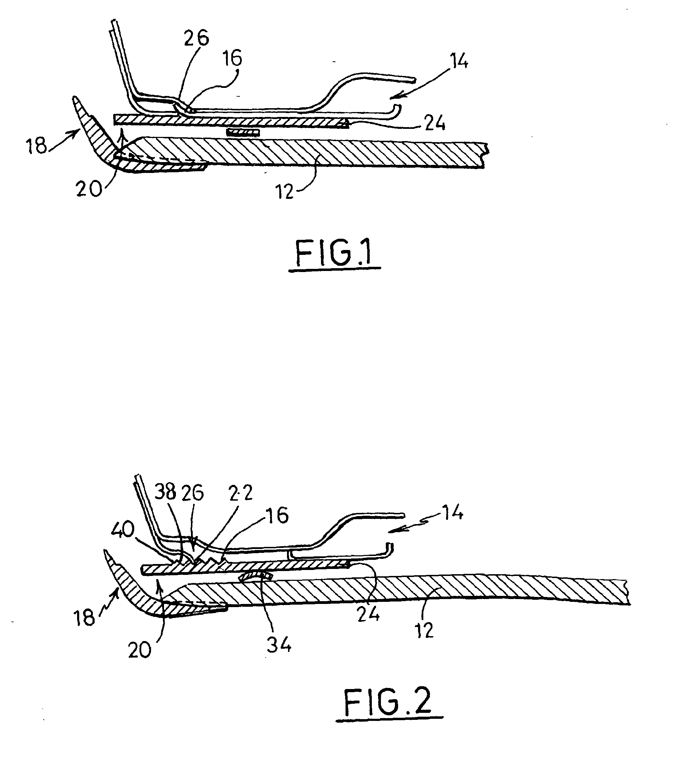

Pour monter un tel panneau d'habillage sur une tôle de caisse de véhicule, la figure 1 illustre un agencement de l'art antérieur, correspondant au préambule de la revendication 1, dans lequel la tôle 14 comporte une zone de réception d'une pièce de montage 18 du panneau 12. La pièce de montage comporte un logement 20 destiné à recevoir un bord du panneau d'habillage 12, une patte d'accrochage 24 de la pièce 18 sur la tôle 14 destinée à être reçue dans la zone de réception, et un moyen de blocage 26 en position longitudinale de la patte 24 dans la zone de réception.

Le moyen de blocage 26 est constitué par un cran unique 16 dont une première surface est inclinée, formant une rampe, pour permettre et faciliter l'introduction de la pièce 18 et dont une seconde surface est verticale pour constituer une butée empêchant l'échappement de la patte 24.

Cependant, l'utilisation de cette pièce 18 à un cran unique 16 ne permet pas de prendre en compte le déplacement longitudinal du panneau d'habillage 12 par rapport à la tôle 14 du toit, notamment en fonction des tolérances de fabrication de la tôlerie de caisse du véhicule, ce qui est inesthétique car un jeu important selon la direction longitudinale peut exister entre ces deux éléments. Par ailleurs, cette pièce 18 n'est pas universelle pour tous les types de véhicule car elle nécessite un découpage de la tôle 14 à une côte précise pour pouvoir maintenir le panneau 12 durablement.

L'objet de l'invention est aussi de proposer un agencement pour le montage d'un panneau d'habillage le long d'une tôle de véhicule automobile perfectionné.

A ce titre, l'invention fournit un agencement du type mentionné précédemment, caractérisé en ce que les moyens de blocage comportent une série de crans transversaux formés sur la patte, et un bord d'une découpe de la tôle destiné à être reçu dans un des crans pour permettre le blocage de la pièce dans plusieurs positions longitudinales par rapport à la tôle.

Ce crantage permet d'assurer un bon positionnement du panneau d'habillage par rapport à la tôle du toit quelles que soient les dispersions dimensionnelles.

Selon un premier mode de réalisation de l'invention, la patte d'accrochage est horizontale et coopère avec un bord d'une découpe de la tôle courbé vers l'intérieur du véhicule pour permettre le blocage de la pièce par rapport à la tôle.

Selon un deuxième mode de réalisation de l'invention, la patte d'accrochage est inclinée et coopère avec pour un bord d'une découpe de la tôle pour permettre le blocage de la pièce par rapport à la tôle.

Avantageusement, chaque cran délimite une surface d'insertion permettant l'introduction de la patte dans la zone de réception.

Selon un premier mode de réalisation, la surface d'insertion est inclinée.

Selon un second mode de réalisation, la surface d'insertion est horizontale.

Avantageusement, chaque cran délimite une surface empêchant l'extraction de la patte hors de la zone de réception.

Selon un premier mode de réalisation, la surface empêchant l'extraction est inclinée.

Selon un second mode de réalisation, la surface empêchant l'extraction est verticale.

Selon d'autres caractéristiques de l'invention,
- la patte d'accrochage comporte une partie déformable élastiquement entre une position active de blocage et une position escamotée, cette partie portant les crans de blocage,
- la zone de réception comporte des moyens de guidage de la patte lors de son insertion ou lors de son retrait.

L'invention concerne également une pièce de montage pour un agencement caractérisée en ce qu'elle est moulée en matière plastique.

L'invention est maintenant décrite en référence aux dessins annexés, donnés à titre non limitatif, dans lesquels :
- la figure 1 est une vue en coupe longitudinale de l'agencement pour le montage d'un panneau d'habillage le long d'une tôle de caisse de véhicule selon l'art antérieur en position montée et bloquée du panneau,
- la figure 2 est une vue analogue à celle de la figure 1 qui illustre un premier mode de réalisation de l'invention,
- la figure 3 est une vue en perspective de la pièce de montage montée sur la tôle du pavillon d'un véhicule, selon le premier mode de réalisation de l'invention, et
- les figures 4 à 6 sont des vues en coupe longitudinale de l'agencement pour le montage d'un panneau d'habillage le long d'une tôle de caisse de véhicule selon un deuxième mode de réalisation à différentes étapes d'insertion de la pièce de montage.

On définit les termes avant et arrière par rapport à la direction longitudinale du véhicule, l'avant désignant le sens de déplacement normal du véhicule, et l'arrière le sens opposé. De même, on définit les termes intérieur et extérieur par rapport à l'habitacle du véhicule.

On a représenté sur la figure 2, un panneau d'habillage 12 destiné à recouvrir un support en tôle 14 qui est, dans l'exemple décrit, un toit ou pavillon de véhicule automobile. Ce panneau 12 est maintenu sur la tôle 14 par une pièce de montage 18.

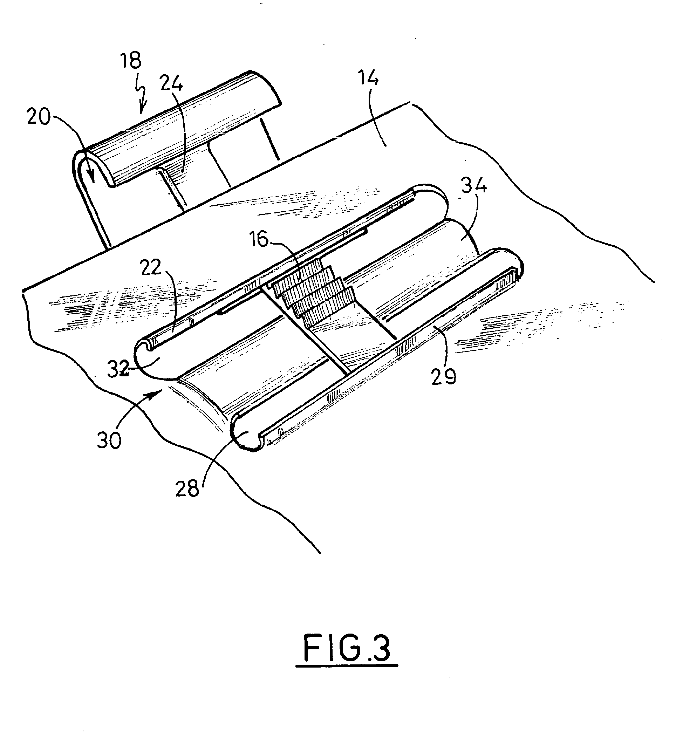

La tôle 14 comporte une zone de réception 30, comme illustrée sur la figure 3, destinée au montage de la pièce 18.

Dans le premier mode de réalisation de l'invention, la zone de réception 30 est constituée de deux encoches ou découpes 32, 28 transversales et voisines se trouvant près du bord arrière du toit 14. On distingue une encoche arrière 32 et une encoche avant 28. Les deux encoches délimitent entre elles un pont 34 qui décalé verticalement vers l'intérieur du véhicule par rapport au plan moyen de la tôle dans cette partie du toit. Ce pont présente la particularité d'être bombé transversalement vers l'extérieur du véhicule de manière à faciliter l'introduction de la pièce de montage 18 dans la tôle 14. Ce pont constitue un premier moyen de guidage de la pièce 18 dans la zone de réception 30. Par ailleurs, l'encoche avant 28 est délimitée par un bord avant 29 incurvé vers l'extérieur du véhicule constituant un second moyen de guidage lors de l'introduction de la pièce 18 dans la zone de réception 30.

La pièce de montage 18, selon l'invention, est moulée en matière plastique. Elle comporte un logement 20 destiné à recevoir un bord du panneau d'habillage 12, une patte 24 d'accrochage de la pièce 18 sur la tôle 14 destinée à être reçue dans la zone de réception 30, et des moyens de blocage 26 en position longitudinale de la patte 24 dans la zone 30.

La patte d'accrochage 24 est apte à être logée dans les deux encoches 32, 28 réalisées dans le toit 14. Elle comporte une partie (non représentée) déformable élastiquement entre une position active de blocage et une position escamotée qui permet l'extraction de la pièce 18 par rapport à la tôle 14. Par ailleurs, elle possède sur sa surface supérieure une série de crans parallèles 16 d'orientation transversale qui constituent une partie des moyens de blocage 26 selon l'invention.

Selon le premier mode de réalisation, ces crans 16 sont destinés à coopérer avec une languette de blocage 22 réalisée par découpe et pliage avec la tôle 14. Cette languette est ici constituée par un bord de l'encoche arrière 32 qui se trouve courbé vers l'intérieur du véhicule de manière à être reçu dans un cran pour bloquer la pièce 18 longitudinalement afin d'empêcher tout déplacement longitudinal du panneau d'habillage 12 par rapport à la tôle 14.

Selon ce mode, chaque cran 16 est délimité par une surface 38 d'insertion inclinée permettant l'introduction de la patte 24 dans la zone de réception 30, et est délimité par une surface 40 inclinée empêchant l'extraction de la patte 24 hors de la zone de réception 30. Les deux surfaces 38 et 40 des crans 16 peuvent posséder des angles d'inclinaison opposés identiques.

Ainsi, pour maintenir le panneau d'habillage 12 contre la tôle 14 selon l'agencement de l'invention, l'opérateur doit placer convenablement le bord du panneau 12 dans le logement 20 de la pièce 18 et insérer la pièce 18, par introduction en force, dans la zone de réception 30 réalisée à l'arrière du toit 14.

La patte d'accrochage 24 est guidée facilement dans les encoches 32 grâce au pont 34 bombé et au bord avant 29 courbé vers le haut. Les crans 16 situés sur cette patte coopèrent avec la languette de blocage 22 pour régler longitudinalement sa position et la bloquer.

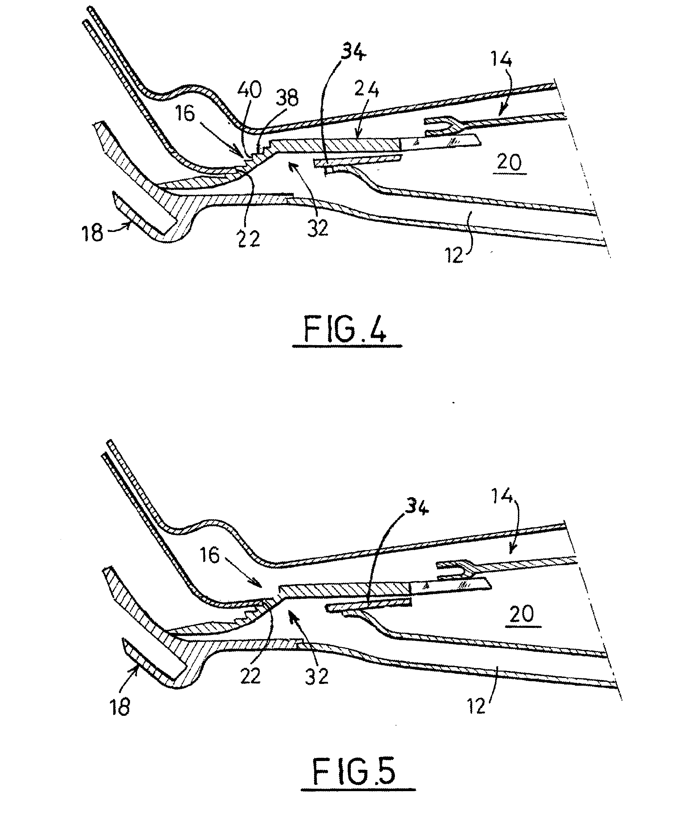

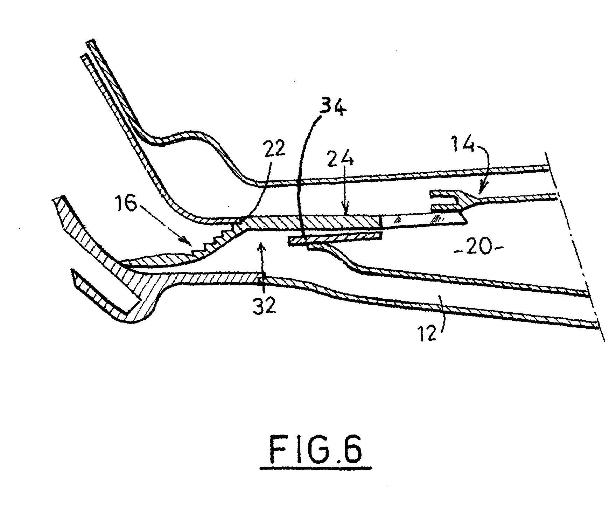

Un second mode de réalisation de cette invention illustré sur les figures 4 à 6 est aussi envisageable. La particularité de ce mode réside dans le fait que la partie de la patte d'accrochage 24 comprenant les crans 16 est inclinée. Ainsi, il n'y a aucune nécessité de modification de tôlerie par rapport à l'art antérieur. Par ailleurs, les crans 16 sont en escalier et présentent donc une surface 38 d'insertion horizontale et une surface 40 d'anti-extraction verticale. Ceci est particulièrement judicieux car, lors de l'insertion de la pièce 18, illustré dans l'ordre chronologique de la figure 6 à la figure 4, la partie arrière de la tôlerie (se trouvant à l'arrière de l'encoche 32) glisse sur la surface d'insertion 38 parallèle à cette dernière et permet un guidage précis, puis le bord arrière de l'encoche 32 se positionne en vis-à-vis de la surface d'anti-extraction 40 pour empêcher l'extraction de la pièce 18. L'utilisateur, par pression sur cette pièce règle ainsi au plus juste et de manière durable la fixation du panneau d'habillage 12 sur la tôle 14.

En outre, les moyens de guidage de la patte 24 dans la zone de réception 30 se révèlent être moins utiles pour ce mode de réalisation.

Ainsi, le fait que cet agencement pour le montage du panneau 12 autorise un réglage longitudinalement, lui permet de s'adapter à différents toits de véhicule, à la condition que la conception et les dimensions de la languette de blocage 22 ou du bord arrière de l'encoche 32 garantissent qu'elle coopère avec au moins un cran 16 de la pièce 18.

Pour retirer la pièce de montage 18, un opérateur doit exercer une pression verticale vers le bas sur la partie déformable de la patte 24 de manière à faire sortir la languette 22 ou le bord arrière de l'encoche 32 hors des crans 16.

## Revendications

1. Agencement pour le montage d'un panneau d'habillage (12) le long d'une tôle (14) de caisse de véhicule automobile, du type dans lequel :
- la tôle (14) comporte une zone de réception (30) d'une pièce de montage (18) du panneau (12), ladite zone présentant au moins une découpe de tôle (28, 32).
- et la pièce de montage (18) comporte :
o un logement (20) destiné à recevoir un bord du panneau d'habillage (12),
o une patte d'accrochage (24) de la pièce (18) sur la tôle (14) destinée à être reçue dans la zone de réception (30), et
o des moyens de blocage (26) en position longitudinale de la patte dans la zone de réception (30),
**caractérisé en ce que** les moyens de blocage (26) comportent :
- une série de crans (16) transversaux formés sur la patte (24), et
- un bord (22) d'une découpe de la tôle (28, 32) destiné à être reçue dans un des crans (16) pour permettre le blocage de la pièce (18) dans plusieurs positions longitudinales par rapport à la tôle (14).

2. Agencement selon la revendication 1, **caractérisé en ce que** la patte d'accrochage (24) est horizontale et coopère avec un bord (22) d'une découpe de la tôle (28, 32) courbé vers l'intérieur du véhicule pour permettre le blocage de la pièce (18) par rapport à la tôle (14).

3. Agencement selon l'une des revendications 1 ou 2, **caractérisé en ce que** la patte d'accrochage (24) est inclinée et coopère avec pour un bord (22) d'une découpe de la tôle (28, 32) pour permettre le blocage de la pièce (18) par rapport à la tôle (14).

4. Agencement selon l'une des revendications précédentes, **caractérisé en ce que** chaque cran (16) délimite une surface (38) d'insertion permettant l'introduction de la patte (24) dans la zone de réception (30).

5. Agencement selon la revendication 4, **caractérisé en ce que** la surface (38) d'insertion est inclinée.

6. Agencement selon la revendication 4, **caractérisé en ce que** la surface (38) d'insertion est horizontale.

7. Agencement selon l'une des revendications précédentes, **caractérisé en ce que** chaque cran (16) délimite une surface (40) empêchant l'extraction de la patte (24) hors de la zone de réception (30).

8. Agencement selon la revendication 7, **caractérisé en ce que** la surface (40) est inclinée.

9. Agencement selon la revendication 7, **caractérisé en ce que** la surface (40) est verticale.

10. Agencement selon l'une des revendications précédentes, **caractérisé en ce que** la patte d'accrochage (24) comporte une partie déformable élastiquement entre une position active de blocage et une position escamotée, cette partie portant les crans de blocage (16).

11. Agencement selon l'une des revendications précédentes, **caractérisé en ce que** la zone de réception (30) comporte des moyens de guidage de la patte (24) lors de son insertion ou lors de son retrait.

12. Pièce (18) de montage pour un agencement selon l'une des revendications 1 à 11, **caractérisée en ce qu**'elle est moulée en matière plastique.

## Claims

1. Arrangement for mounting a trim panel (12) along a motor vehicle body sheet (14), of the type in which:
- the sheet (14) comprises a zone (30) for receiving a part (18) for mounting the panel (12), said zone having at least one sheet cut-out (28, 32); and
- the mounting part (18) comprises:
o a housing (20) for receiving one edge of the trim panel (12);
o a lug (24) for attaching the part (18) to the sheet (14) and intended to be received in the receiving zone (30); and
o means (26) for locking the lug longitudinally in position in the receiving zone (30),
**characterized in that** the locking means (26) comprise:
- a number of transverse notches (16) formed on the lug (24); and
- an edge (22) of a sheet cut-out (28, 32), which edge is intended to be received in one of the notches (16) in order to allow the part (18) to be locked in several longitudinal positions relative to the sheet (14).

2. Arrangement according to Claim 1, **characterized in that** the attachment lug (24) is horizontal and cooperates with an edge (22) of a sheet cut-out (28, 32) curved towards the inside of the vehicle in order to allow the part (18) to be locked to the sheet (14).

3. Arrangement according to either of Claims 1 and 2, **characterized in that** the attachment lug (24) is inclined and cooperates with an edge (22) of a sheet cut-out (28, 32) in order to allow the part (18) to be locked to the sheet (14).

4. Arrangement according to one of the preceding claims, **characterized in that** each notch (16) delimits an insertion surface (38) allowing the lug (24) to be introduced into the receiving zone (30).

5. Arrangement according to Claim 4, **characterized in that** the insertion surface (38) is inclined.

6. Arrangement according to Claim 4, **characterized in that** the insertion surface (38) is horizontal.

7. Arrangement according to one of the preceding claims, **characterized in that** each notch (16) delimits a surface (40) that prevents the lug (24) from being removed from the receiving zone (30).

8. Arrangement according to Claim 7, **characterized in that** the surface (40) is inclined.

9. Arrangement according to Claim 7, **characterized in that** the surface (40) is vertical.

10. Arrangement according to one of the preceding claims, **characterized in that** the attachment lug (24) comprises a portion that is elastically deformable between an active locking position and a retracted position, this portion bearing the locking notches (16).

11. Arrangement according to one of the preceding claims, **characterized in that** the receiving zone (30) comprises means for guiding the lug (24) during its insertion or its removal.

12. Mounting part (18) for an arrangement according to one of Claims 1 to 11, **characterized in that** it is moulded from a plastic.

## Patentansprüche

1. Anordnung zur Montage einer Verkleidungsplatte (12) entlang eines Blechs (14) eines Kraftfahrzeugaufbaus, von dem Typ, bei dem:
- das Blech (14) eine Aufnahmezone (30) für ein Montagebauteil (18) der Platte (12) aufweist, wobei die Zone mindestens einen Blechausschnitt (28, 32) besitzt,
- und dass Montagebauteil (18) aufweist:
o einen Sitz (20), der dazu bestimmt ist, einen Rand der Verkleidungsplatte (12) aufzunehmen,
o eine Lasche (24) zur Befestigung des Bauteils (18) auf dem Blech (14), die dazu bestimmt ist, in der Aufnahmezone (30) aufgenommen zu werden, und
o Blockiermittel (26) in Längsstellung der Lasche in der Aufnahmezone (30),
**dadurch gekennzeichnet, dass** die Blockiermittel (26) aufweisen:
- eine Reihe von Querkerben (16), die auf der Lasche (24) ausgebildet sind, und
- einen Rand (22) eines Ausschnitts des Blechs (28, 32), der dazu bestimmt ist, in einer der Kerben (16) aufgenommen zu werden, um die Blockierung des Bauteils (18) in mehreren Längsstellungen bezüglich des Blechs (14) zu ermöglichen.

2. Anordnung nach Anspruch 1, **dadurch gekennzeichnet, dass** die Befestigungslasche (24) waagrecht ist und mit einem Rand (22) eines Ausschnitts des Blechs (28, 32) zusammenwirkt, der zur Innenseite des Fahrzeugs gekrümmt ist, um die Blockierung des Bauteils (18) bezüglich des Blechs (14) zu ermöglichen.

3. Anordnung nach einem der Ansprüche 1 oder 2, **dadurch gekennzeichnet, dass** die Befestigungslasche (24) geneigt ist und mit einem Rand (22) eines Ausschnitts des Blechs (28, 32) zusammenwirkt, um das Blockieren des Bauteils (18) bezüglich des Blechs (14) zu ermöglichen.

4. Anordnung nach einem der vorhergehenden Ansprüche, **dadurch gekennzeichnet, dass** jede Kerbe (16) eine Einführfläche (38) begrenzt, die das Einführen der Lasche (24) in die Aufnahmezone (30) ermöglicht.

5. Anordnung nach Anspruch 4, **dadurch gekennzeichnet, dass** die Einführfläche (38) gekrümmt ist.

6. Anordnung nach Anspruch 4, **dadurch gekennzeichnet, dass** die Einführfläche (38) waagrecht ist.

7. Anordnung nach einem der vorhergehenden Ansprüche, **dadurch gekennzeichnet, dass** jede Kerbe (16) eine Fläche (40) begrenzt, die das Herausziehen der Lasche (24) aus der Aufnahmezone (30) verhindert.

8. Anordnung nach Anspruch 7, **dadurch gekennzeichnet, dass** die Fläche (40) geneigt ist.

9. Anordnung nach Anspruch 7, **dadurch gekennzeichnet, dass** die Fläche (40) senkrecht ist.

10. Anordnung nach einem der vorhergehenden Ansprüche, **dadurch gekennzeichnet, dass** die Befestigungslasche (24) einen zwischen einer aktiven Blockierstellung und einer eingezogenen Stellung elastisch verformbaren Bereich aufweist, wobei dieser Bereich die Blockierkerben (16) trägt.

11. Anordnung nach einem der vorhergehenden Ansprüche, **dadurch gekennzeichnet, dass** die Aufnahmezone (30) Führungsmittel für die Lasche (24) bei ihrem Einführen oder Herausziehen aufweist.

12. Montagebauteil (18) für eine Anordnung nach einem der Ansprüche 1 bis 11, **dadurch gekennzeichnet, dass** es aus Kunststoff geformt ist.
